# EUROPEAN PATENT APPLICATION

(11) **EP 1 978 064 A1**
(43) Date of publication of application: **08.10.2008**
(21) Application number: 07381029.3
(22) Date of filing: 04.04.2007
(51) Int. Cl.: C09D 5/03, C09D 133/06, C09D 167/00

(54) **Powder coating composition**

(71) Applicant: DuPont Powder Coatings Ibérica, S.L., 08191 Rubi Barcelona (ES)
(72) Inventor: Rodrigo, Antonio, 2525-769, Peniche (PT); Rodriguez-Santamarta, Carlos, E-08002, Barcelona (ES); Marelli, Ernesto, F-42600, Savigneux (FR)
(74) Representative: Elzaburu Marquez, Alberto

(57) **Abstract**

The present invention provides a powder coating composition comprising an intimate mixture comprising
(A) 60 to 99 wt% of a mixture comprising at least one polyester resin and at least one (meth) acrylate resin,
(B) 0 to 30 wt% of at least one cross-linking agent,
(C) 0.1 to 10 wt% of at least one pigment,
whereby component (A) and component (C) are selected in such a way that the powder coating composition provide a low gloss of the cured coating in the range of 1 to 20 gloss units at 60° angle according to DIN 67530 (ISO2813) as well as provide a surface structure of the cured coating characterized by a value of Integral 1 in the range of higher than 8.00E+00 measured by the mechanical profilometry Fourier analysis, and whereby the wt% are based on the total weight of the powder coating composition. The powder coating composition according to the invention provides the desired special metallic effect of the coated surface which meets the metallic effect resulted with anodized aluminium.

## Description

### Field of the Invention

The invention is directed to a powder coating composition for coating substrate surfaces providing a special metallic effect on the substrate surface, and a process for coating the substrate, for interior and exterior applications in architecture and industrial market.

### Description of Related Art

Materials such as aluminium, magnesium and chromium nickel steel are used more and more in the architecture market and for industrial and decorative applications. Typically, such metals need to be prepared by a special finishing of their surfaces to provide excellent special effects.

Particularly, aluminium building parts or elements are usually finished by the so-called "anodizing process". The anodizing process is an electrochemical process whereby the aluminium surface is changed into aluminium oxide. The resulted aluminium oxide is strongly bonded with the aluminium base, and it provides excellent hardness, corrosion- resistance, weather resistance and light fastness of the surface. It is possible to color the resulting oxide film using organic dyes. Although providing desired properties of aluminium surfaces the anodizing process needs to use strong acids and bases and, therefore, can cause harzards and waste disposal issues. Additionally the process can provide undesired monochrome parts on the metal surface and can lead to tensile failure due to surface cracks. Also, the surface preparation requires a careful smoothing and polishing.

An alternative to the anodizing process is a coating using particularly powder coating compositions. Such powder compositions can provide specific metallic effects such as color shift, pearlescence, fluorescence, on the cured coating. Commonly metallic pigments are used to produce such coatings. WO 03/033172 discloses a two-part powder coating system providing a chromatic and metallic effect coloration whereby the first part powder system contains metallic and chromatic pigments and form a base coating, and whereby the second part powder system is free of chromatic pigments and form a clear coating.

The powder coating compositions providing such metallic effects can show a poor color match of the desired effect resulting by anodizing of aluminium, and they can show poor smoothness in combination with visible so-called "orange peel" effects. Moreover, the resulted coatings need to be protected with at least second layer of, e.g., a clear coat, and this is not appreciated due to productivity of the manufacture line.

There is a need to provide coatings based on a powder coating composition that provides the desired special metallic effect which meets the excellent surface effects resulted by the known anodizing process, and which fulfill the requirements of architectural coating applications such as high appearance and smoothness. Additionally, the desired properties should be provided by a one-layer coating of the powder coating composition.

### Summary of the Invention

The present invention provides a powder coating composition comprising an intimate mixture comprising
(A) 60 to 99 wt% of a mixture comprising at least one polyester resin and at least one (meth) acrylate resin,
(B) 0 to 30 wt% of at least one cross-linking agent,
(C) 0.1 to 10 wt% of at least one pigment,
whereby component (A) and component (C) are selected in such a way that the powder coating composition provide a low gloss of the cured coating in the range of 1 to 20 gloss units at 60° angle according to DIN 67530 (ISO2813) as well as provide a surface structure of the cured coating characterized by a
value of Integral 1 in the range of higher than 8.00E+00 measured by the mechanical profilometry Fourier analysis, and whereby the wt% are based on the total weight of the powder coating composition.

The powder coating composition according to the invention makes it possible to provide the desired special metallic effect of the coated surface which meets the metallic effect resulted with anodized aluminium. A one-layer coating of the substrate is possible providing a high appearance and smoothness of the cured coating, a strong adhesion to primered or non-primered substrate surfaces as well as an excellent hardness, corrosion-resistance, weather resistance and light fastness of the cured coating.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the stated ranges can be used to achieve substantially the same results as values within the ranges. Also, the disclosure of these ranges is intended as a continuous range including every value between the minimum and maximum values.

All patents, patent applications and publications referred to herein are incorporated by reference in their entirety.

The powder coating composition according to the invention provides coatings having a low gloss level in the range of 1 to 20, preferably in the range of 1 to 15 gloss units at 60° angle.

The gloss is measured at 60° angle according to DIN 67 530 (ISO2813). Typically, gloss can be adjusted in the range of 1 to 130 gloss units; typically a low gloss has a gloss in the range of 1 to 30 gloss units and a medium gloss finish in the range of 30 to 70 gloss units.

The powder coating composition according to the invention provides coatings having a surface structure of the cured coating characterized by a value of Integral 1 in the range of higher than 8.00E+00, preferably in the range of 1.OOE+01 to 1.40E+01, measured by the mechanical profilometry Fourier analysis.

The mechanical profilometry Fourier analysis according to this invention means a surface structure analysis using a Hommeltester (Hommel, Germany) known by a person skilled in the art, whereby the surface profiles have recorded over a scan length of 15 mm. The evaluation of mechanical profile measurements according to average roughness Ra value according to DIN EN 10049 gives an integrated information about the surface structure. The sample is moved by a precise positioning table for a small distance between two line scans. A cut off wavelength of 2.5mm for 15mm scan length is used to separate between roughness and waviness profile. The square of amplitudes (intensity, measured in µm²) of the calculated sine and cosine waves representing the surface profile is plotted versus the corresponding wave number (reciprocal wavelength). The Integral 1 is the sum of squares of the amplitudes in the wave length range from 1 to 10 mm.

The powder coating composition according to the invention comprises as component (A) a mixture comprising at least one polyester resin and at least one (meth) acrylate resin.

The term (meth) acrylate is respectively intended to mean acrylic and/or methacrylic.

Suitable polyesters are saturated and unsaturated polyesters. They may be produced in a conventional manner by reacting polycarboxylic acids, and the anhydrides and/or esters thereof with polyalcohols, as is, for example, described in D.A. Bates, The Science of Powder Coatings, volumes 1 & 2, Gardiner House, London, 1990. Unsaturated polyesters can be crosslinked by free-radical polymerization and can be prepolymers, such as, polymers and oligomers, containing, per molecule, one or more, free-radically polymerizable olefinic double bonds.

Examples of suitable polycarboxylic acids, and the anhydrides and/or esters thereof include maleic acid, fumaric acid, malonic acid, adipic acid, 1.4-cyclohexane dicarboxylic acid, isophthalic acid, terephthalic acid, acrylic acid, and their anhydride form, or mixtures thereof. Examples of suitable alcohols are benzyl alcohol, butanediol, hexanediol, diethylene glycol, pentaerytritol, neopentyl glycol, propylene glycol, and mixtures thereof.

Mixtures of carboxyl and hydroxyl group containing polyesters may be used. The carboxy-functionalized polyesters according to the invention have an acid value of 10 to 200 mg of KOH/g of resin and the hydroxy-functionalized polyesters have an OH value of 10 to 200 mg of KOH/g of resin.

Preferred is the use of carboxy-functionalized polyesters.

Suitable (meth)acrylic resins are unsaturated resins, such as, e.g., copolymers prepared from alkyl(meth)acrylates with glycidyl(meth)acrylates and olefinic monomers; functionalized resins such as polyester (meth)acrylates, epoxy (meth)acrylates, urethane (meth)acrylates, glycidyl(meth)acrylates.

Preferably glycidyl(meth)acrylates are used.

The polyesters and (meth)acrylic resins of component (A) have a glass transition temperature Tg in a range of, e.g., 35 to 80°C, Tg determined by means of differential scanning calorimetry (DSC).

The number average molecular weight Mn of the polyesters and the (meth)acrylic resins is in the range of, e.g., 2000 to 10.000, Mn determined or to be determined by gel permeation chromatography (GPC; divinylbenzene-cross-linked polystyrene as the immobile phase, tetrahydrofuran as the liquid phase, polystyrene standards).

Crystalline and/or semicrystalline polyesters and (meth)acrylic resins are also usable which have a Tm (melting temperature) in the range of e.g., 50 to 150°C(to check), determined by means of DSC.

The polyesters and (meth)acrylic resins can also comprise self crosslinkable resins containing cross-linkable functional groups known by a person skilled in the art.

The cross-linking agent (B) of the composition according to the invention may include conventional curing agents suitable for polyesters and (meth)acrylic resins known by a person skilled in the art. Example are cycloaliphatic, aliphatic or aromatic polyisocyanates; cross-linking agents containing epoxy groups, such as, for example, triglycidyl isocyanurate (TGIC); polyglycidyl ethers based on diethylene glycol; glycidyl-functionalized (meth)acrylic copolymers; and cross-linking agents containing amino, amido, (meth)acrylate and/or hydroxyl groups, as well as vinyl ethers. Furthermore, conventionally cross-linking agents such as, dicyanodiamide hardeners, carboxylic acid hardeners or phenolic hardeners are usable.

Preferred is the use of cross-linking agents containing amino, amido, and/or hydroxyl groups, in a range of 0.5 to 30 wt%, based on the total weight of the powder coating composition according to the invention.

The coating composition of the invention comprises as component (C) 0.1 to 10 wt%, preferably 0.1 to 5 wt% and most preferably 0.5 to 3 wt% of at least one pigment. The pigment can be transparent and/or color-imparting pigments which are any conventional coating pigments of an organic or inorganic nature known by a person skilled in the art, selected to provide, together with component (A) and (B) of the invention, coatings of the required gloss and surface structure measured by the mechanical profilometry Fourier analysis.

Examples of inorganic or organic color-imparting pigments can be micronized titanium dioxide, carbon black, azopigments and/or phthalocyanine pigments, metallic pigments e.g. leafing and non-leafing metallic pigments based on silver, copper, aluminum, inorganic and/or organic coated and/or encapsulated aluminum flakes and/or particles, and/or micas, inorganic and/or organic chromatic pigments. Leafing pigments orientate parallely to the surface of the coating film and non-leafing pigments are intimately bonded with the paint matrix.

Examples of aluminium pigment are Standard® PCS aluminum powder from Eckart, Blitz® aluminum powder from Benda-Lutz, examples of mica pigments are Iriodin® pigments from Merck, Exterior Mearlin® pigments from Engelhard.

Preferred is the use of at least one metallic pigment, particularly preferred is the use of at least one mica pigment selected to provide, together with component (A) and (B) of the invention, coatings of the required gloss and surface structure measured by the mechanical profilometry Fourier analysis.

The powder coating compositions according to the invention may contain as further components the constituents conventional in powder coating technology, such as additives and fillers as known by a person skilled in the art. The constituents are used in conventional amounts known to the person skilled in the art, for example, 0.01 to 25 wt. %, based on the total weight of the powder coating composition.

Additives are, for example, degassing auxiliaries, flow-control agents, flatting agents, texturing agents, fillers (extenders), photoinitiators, catalysts and dyes. Compounds having anti-microbial activity may also be added to the powder coating compositions. Examples of usable extenders are silicon dioxide, aluminum silicate, barium sulfate, and calcium carbonate. It is also preferred to use filler-free powder coating compositions.

The crosslinking reaction may be additionally accelerated by the presence in the powder coating composition according to the invention of catalysts known from thermal crosslinking. Such catalysts are, for example, tin salts, phosphides, amines and amides. They may be used, for example, in quantities of 0.02 to 3 wt%, based on the total weight of the powder coating composition.

The powder coating compositions may contain photoinitiators in order to initiate the free-radical polymerization. Suitable photoinitiators include, for example, those which absorb in the wavelength range from 190 to 600 nm. Examples for photoinitiators for free-radically curing systems are benzoin and derivatives, acetophenone and derivatives, benzophenone and derivatives, thioxanthone and derivatives, anthraquinone, organo phosphorus compounds, such as, for example, acyl phosphine oxides. The photoinitiators are used, for example, in quantities of 0 to 7 wt%, based on the total weight of the powder coating composition.

The powder coating composition according to the invention may be prepared by conventional manufacturing techniques used in the powder coating industry, such as, extrusion and/or grinding processes.

For example, the components used in the powder coating composition, can be blended together with the pigments of component (C) and then heated to a temperature to melt the mixture and then the mixture is extruded. The extruded material is then cooled on chill roles, broken up and then ground to a fine powder, which can be classified to the desired grain size, for example, to an average particle size of 20 to 200 µm.

The powder coating composition according to the invention may also be prepared by spraying from supercritical solutions, NAD "non-aqueous dispersion" processes or ultrasonic standing wave atomization process.

Alternatively, the ingredients of the powder coating composition according to the invention may also be processed first without the pigments (C). In such cases the pigments (C) according to the invention may be processed with the finished powder coating particles.

For example, the pigments (C) according to the invention may be processed after extrusion and grinding of the ingredients comprising components (A) and (B) of the powder coating composition by dry-blending the pigments (C) with the finished powder coating particles.

Furthermore, the pigments of component (C) may be processed with the finished powder coating particles after extrusion and grinding by the so-called "bonding" process. Particularly, this means, that the pigments are bonded with the powder coating particles using an impact fusion. For this purpose, the pigments may be mixed with the powder coating particles. During blending, the individual powder coating particles are treated to softening their surface so that the pigments adhere to them and are homogeneously bonded with the surface of the powder coating particles. The softening of the powder particles' surface may be done by heat treating the particles to a temperature, e.g., the glass transition temperature Tg of the composition, in a range, of e.g., 40 to 70°C. After cooling the mixture the desired particle size of the resulted particles may be proceed by a sieving process, for example, to an average particle size of 20 to 200 µm.

Preferably the pigments of component (C) may be incorporated into the powder coating composition via the above bonding process.

Therefore the invention also relates to a process for preparation of a powder coating composition.

The powder coating composition of this invention may be applied by, e.g., electrostatic spraying, thermal or flame spraying, or fluidized bed coating methods, all of which are known to those skilled in the art.

The coating compositions may be applied to, e.g., metallic substrates, non-metallic substrates, such as, paper, wood, plastics, for example, also fiber re-inforced plastic parts, glass and ceramics, as a one-coating system or as coating layer in a multi-layer film build.

Particularly, the coating composition of this invention may be applied to metallic substrates, such as, e.g. aluminium, e.g. aluminium profiles, aliuminium alloys, windows frames.

The powder coating composition according to the invention may also be used for high speed on, for example, metal, wood, paper and film, for example, for the coil coating process at coating speeds of, for example, about > 30 m/min, for example, in the range of 30 to 50 m/min.

In certain applications, the substrate to be coated may be pre-heated before the application of the powder composition, and then either heated after the application of the powder or not. For example, gas is commonly used for various heating steps, but other methods, e.g., microwaves, IR or NIR are also known.

The powder coating compositions according to the invention can be applied directly on the substrate surface or on a layer of e.g. a primer which can be a liquid or a powder based primer. The powder coating compositions according to the invention can also be applied as a base coating layer in a multilayer coating system as known at a person skilled in the art. It is possible to apply a clear coating layer on top of this base coating layer.

The invention therefore also relates to a process for coating substrates by application of a powder coating composition according to the invention as at least one coating layer and curing the applied powder coating layer(s).

The applied and melted powder coating layer can be cured by thermal energy. The coating layer may, for example, be exposed by convective, gas and/or radiant heating, e.g., infra red (IR) and/or near infra red (NIR) irradiation, as known in the art, to temperatures of, e.g., 80°C to 220°C, preferably of 120°C to 200°C (object temperature in each case).

The powder coating composition can also be cured by high energy radiation known by a skilled person. UV (ultraviolet) radiation or electron beam radiation may be used as high-energy radiation. UV-radiation is preferred. Irradiation may proceed continuously or discontinuously.

Dual curing may also be used. Dual curing means a curing method of the powder coating composition according to the invention where the applied composition can be cured, e.g., both by UV irradiation and by thermal curing methods known by a skilled person.

The invention therefore also relates to an article produced by the process for coating substrates by application of the powder coating composition according to the invention and curing.

The present invention is further defined in the following Examples. It should be understood that these Examples are given by way of illustration only. From the above discussion and these Examples, one skilled in the art can ascertain the essential characteristics of this invention, and without departing from the spirit and scope thereof, can make various changes and modifications of the invention to adapt it to various uses and conditions. As a result, the present invention is not limited by the illustrative examples set forth herein below, but rather is defined by the claims contained herein below.

The following Examples illustrate the invention. The amounts are in parts per weight.

### Examples

### Example 1

### Manufacture of Powder Coatinq Composition and Application

### A powder coating composition is prepared according to the following

### Formulation 1:

| **Component** | **Weight Percent wt%** |
|---|---|
| Unsaturated polyester resin (Acid value > 30 mgKOH/g, Tg > 60°C) | 53,7 |
| Glycidyl functionalized polyacrylic resin (epoxy equivalent weight >600 g/eq) | 19 |
| Crosslinker (Hydroxyalkilamide) | 1,6 |
| Titanium dioxide | 24,4 |
| Flow control agent | 1,0 |
| Degassing agent | 0,3 |

The ingredients of Formulation 1 are mixed together and extruded in an extruder PR 46 (firm: Buss AG) at 120°C. The melt-mixed formulation is cooled and the resulted material is grinded to a D50 value of 30-40 µm particle size distribution.

The pigments of component (C) according to the invention are bonded to the resulted particles of Formulation 1 by the following process in general: The amount of powder particles based on Formulation 1 is loaded into a turbo mixer (e.g., firm: PLAS MEC) and is heated to a temperature of 57°C during the highspeed mixing. Mica pigments are added resulting in Formulation 2 as follows:

### Formulation 2

| **Component** | **Weight Percent wt%** |
|---|---|
| Formulation 1 | 97,5 |
| Mica pigment A | 2 |
| Mica pigment B | 0,5 |

After a blending time of 3 to 4 minutes the mixture is cooled to a temperature of about 25 to 26°C, and the resulting particles are sieved on a 150 µm sieve to give the formulation 2.

The un-bonded pigments are separated from the bonded particles.

The final powder coating composition is applied to an aluminium profil using a corona gun (firm: ITW Gema) to a film thickness of 80 µm. Finally the coating is cured in a convection oven at 200°C for 10 minutes.

### Example 2

### Test of the Cured Coating

**Table 1: Results of the cured coating according to the invention**

| **Property** | **Value** |
|---|---|
| Gloss (at 60° angle according to ISO 2813) | 10 |
| Adhesion | G0 |
| Bend Test (EN ISO 1519), 5 mm mandrel | Pass |
| Impact test | >2,5 Nm |
| Accelerated Weathering test (500h QUV 313nm) | Gloss retention > 50% DE < 1,5 |
| Surface Structure (Integral 1 measured by the mechanical profilometry Fourier analysis) | 1.30E+01 (wavelength range 1-10 mm) |

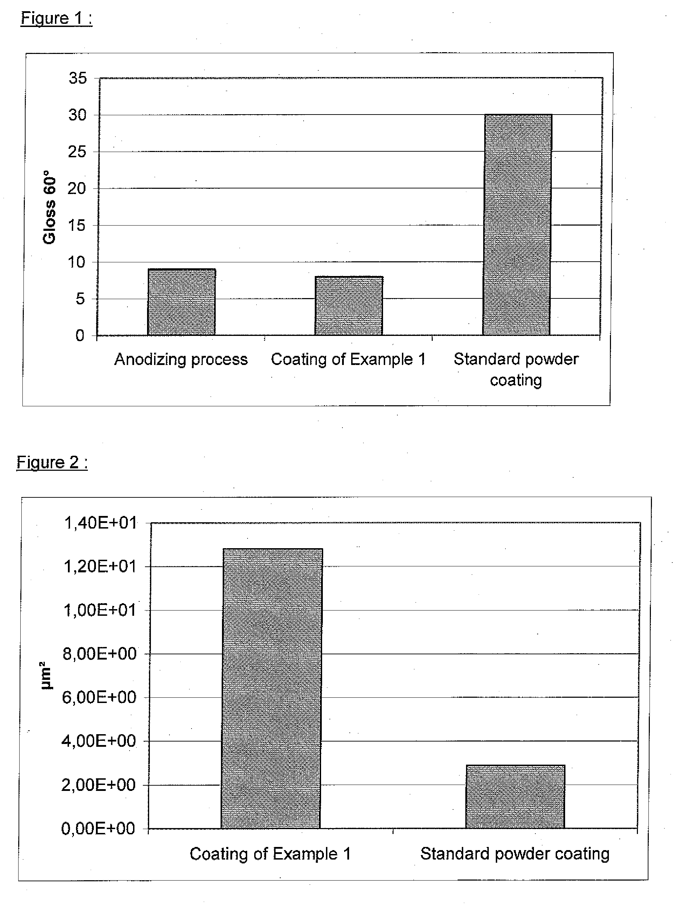

Figure 1 shows the gloss of the coating according to Example 1 compared with a surface prepared by the anodizing process and with a standard powder coating (based on a powder coating composition comprising metallic pigments according to prior art).

Figure 2 shows the surface structure measured by the mechanical profilometry Fourier analysis of the coating according to Example 1 compared with a standard powder coating (based on a powder coating composition comprising metallic pigments according to prior art).

## Claims

1. A powder coating composition comprising an intimate mixture comprising
(A) 60 to 99 wt% of a mixture comprising at least one polyester resin and at least one (meth) acrylate resin,
(B) 0 to 30 wt% of at least one cross-linking agent,
(C) 0.1 to 10 wt% of at least one pigment,
whereby component (A) and component (C) are selected in such a way that the powder coating composition provide a low gloss of the cured coating in the range of 1 to 20 gloss units at 60° angle according to DIN 67530 (ISO2813) and a surface structure of the cured coating showing a value of Integral 1 of higher than 8.00E+00 measured by the mechanical profilometry Fourier analysis, whereby the wt% are based on the total weight of the powder coating composition.

2. The composition according to claim 1 wherein the surface structure of the cured coating showing a value of Integral 1 in the range of 1.00E+01 to 1.40E+01 measured by the mechanical profilometry Fourier analysis.

3. The composition according to claims 1 and 2 wherein a mixture of at least one carboxy-functionalized polyester and at least one (meth) acrylate resin is used as component (A).

4. The composition according to claims 1 to 3 wherein 0.5 to 30 wt% of at least one cross-linking agent is used.

5. The composition according to claims 1 to 4 wherein 0.1 to 5 wt% of at least one pigment is used.

6. The composition according to claim 5 wherein metallic pigments are used as pigment.

7. A process of preparation by using the powder coating composition of claims 1 to 6 and comprising the steps (a) blending together the components (A), (B) and (C), (b) heating the blended components to a temperature to melt the mixture, (c) extruding the melt mixture and (d) cooling, braking up and grinding to a fine powder.

8. A process of preparation by using the powder coating composition of claims 1 to 6 and comprising the steps (a) blending together the components (A) and (B), (b) heating the blended components to a temperature to melt the mixture, (c) extruding the melt mixture, (d) cooling, braking up and grinding to a fine powder and (e) dry-blending the component (C) with the finished powder coating particles.

9. A process of preparation by using the powder coating composition of claims 1 to 6 comprising the steps (a) blending together the components (A) and (B), (b) heating the blended components to a temperature to melt the mixture, (c) extruding the melt mixture, (d) cooling, braking up and grinding to a fine powder and (e) and bonding the component (C) with the finished powder coating particles by impact fusion.

10. A process for powder coating a substrate by applying the powder coating composition of claims 1 to 6 on the substrate surface and curing the coating.

11. An article produced by the process of claim 10.
